# DEMANDE DE BREVET EUROPEEN

(11) **EP 4 203 214 A1**
(43) Date de publication de la demande: **28.06.2023**
(21) Numéro de dépôt: 22211734.3
(22) Date de dépôt: 06.12.2022
(51) Int. Cl.: H02G 1/14, H02G 15/18

(54) **DISPOSITIF D'INSTALLATION D'UNE PIÈCE TUBULAIRE EXPANSÉE SUR DES CÂBLES ÉLECTRIQUES ET PROCÉDÉ ASSOCIÉ**

(30) Priorité: 21.12.2021 FR 2114126
(71) Demandeur: Nexans, 92400 Courbevoie (FR)
(72) Inventeur: SOUSA, Marcel, 08350 Donchéry (FR)
(74) Mandataire: Ipsilon

(57) **Abrégé**

Ce dispositif (10) d'installation d'une pièce tubulaire expansée (14) sur au moins un câble électrique comporte au moins un tube support (12) sur lequel est disposée la pièce tubulaire expansée (14) et une couche de graisse ou un film plastique (16) entre l'au moins un tube support (12) et la pièce tubulaire expansée (14). L'au moins un tube support (12) comporte au moins une partie tronconique (12₁, 12₂) qui présente un angle d'ouverture (α) compris entre 1° et 20°.

## Description

La présente invention se rapporte à un dispositif d'installation d'une pièce tubulaire expansée sur au moins un câble électrique, ainsi qu'à un procédé associé.

L'invention appartient au domaine des outils en rapport avec les câbles électriques.

Pour mettre en place une pièce tubulaire expansée rétractable à froid sur des câbles électriques, par exemple au niveau d'une jonction entre deux câbles, on utilise généralement un tube support, autour duquel on dispose la pièce tubulaire expansée, puis on place l'ensemble autour des câbles et on retire le tube support, de façon à laisser la pièce tubulaire expansée se rétracter autour des câbles.

Pour faciliter son retrait, le tube support est composé, soit de deux demi-coquilles, soit de deux tubes et pour permettre un bon glissement lors du retrait, un film composé par exemple de polyéthylène siliconé sur ses deux faces est déposé sur le tube support.

Cependant, l'assemblage des demi-coquilles ou des deux tubes par clippage ou par soudure, ainsi que l'application du film, requièrent beaucoup de main d'oeuvre et de savoir-faire. L'opération de mise en place de la pièce expansée est au mieux semi-automatique, car l'ensemble des actions est difficilement automatisable.

En outre, si le film est défectueux ou mal mis en place et en fonction des conditions de transport, de stockage, notamment de la température et d'autres facteurs, le retrait du tube support peut s'avérer difficile et, a contrario, une expulsion inopinée du tube support peut survenir dans le conditionnement.

La présente invention a pour but de remédier aux inconvénients précités de l'art antérieur.

Dans ce but, la présente invention propose un dispositif d'installation d'une pièce tubulaire expansée sur au moins un câble électrique, comportant au moins un tube support sur lequel est disposée la pièce tubulaire expansée et une couche de graisse ou un film plastique entre l'au moins un tube support et la pièce tubulaire expansée, l'au moins un tube support comportant au moins une partie tronconique, le dispositif étant remarquable en ce que la partie tronconique présente un angle d'ouverture compris entre 1° et 20°.

Cet angle d'ouverture particulier, combiné à l'utilisation de la couche de graisse ou d'un film plastique ayant des propriétés exceptionnelles de glissement à sec et de résistance à la traction et à la rupture, permet l'expulsion automatique du tube support lors de la rétractation à froid de la pièce tubulaire expansée. En effet, une partie de la force de pression circonférentielle due à la rétractation radiale de la pièce expansée se transforme en une force longitudinale appliquée au(x) tube(s) qui la supporte(nt).

Ainsi, l'invention offre une ergonomie améliorée et un gain de temps au monteur, qui n'a plus besoin de tirer le ou les tubes au moyen d'une poignée en métal ni d'un quelconque outil supplémentaire, ni de forcer pour les enlever. Il lui suffit simplement, lorsque c'est nécessaire, d'amorcer l'auto-expulsion en exerçant une légère torsion ou pression sur la pièce tubulaire expansée pour désolidariser les deux tubes le cas échéant, ou par la dépose d'une pièce servant de verrouillage.

Il a également besoin de moins d'espace dans la fouille, la cellule ou le poste électrique concerné pour installer le matériel.

Dans un mode particulier de réalisation, l'angle d'ouverture est compris entre 10° et 20°. Cela rend l'auto-expulsion encore plus rapide.

Dans un mode particulier de réalisation, la couche de graisse est composée de polytétrafluoroéthylène, PTFE.

Cette composition permet à la graisse de répondre aux normes les plus sévères en termes de vieillissement, d'endurance et de tenue aux températures. Elle conserve son onctuosité, sa viscosité et garde ses propriétés fonctionnelles lubrifiantes.

Dans un mode particulier de réalisation, l'au moins un tube support comporte deux parties tronconiques assemblées par leur extrémité de plus petit diamètre et peuvent être séparées l'une de l'autre.

En variante, l'au moins un tube support comporte deux parties tronconiques séparées disposées l'une contre l'autre par leur extrémité de plus petit diamètre et le dispositif comporte en outre une pièce de verrouillage amovible maintenant les deux parties tronconiques l'une contre l'autre.

Dans un mode particulier de réalisation où l'au moins un tube support comporte deux parties tronconiques, l'extrémité de plus petit diamètre de chacune des deux parties tronconiques comporte un chanfrein.

Cela favorise encore davantage l'auto-expulsion de l'au moins un tube support.

Dans un mode particulier de réalisation, la surface extérieure de l'au moins un tube support est obtenue par moulage par injection et comporte une pluralité de rainures longitudinales.

Ces rainures disposées dans le sens de déplacement de l'au moins un tube support favorisent également son auto-expulsion.

Dans le même but que celui indiqué plus haut, la présente invention propose également un procédé d'installation d'une pièce tubulaire expansée sur au moins un câble électrique au moyen d'un dispositif tel que décrit succinctement ci-dessus, remarquable en ce qu'il comporte des étapes consistant à :
revêtir l'au moins un tube support de la couche de graisse ou du film plastique ;
disposer la pièce tubulaire expansée autour de l'au moins un tube support ; et
disposer l'au moins un tube support et la pièce tubulaire expansée autour de l'au moins un câble électrique,
la pièce tubulaire expansée provoquant lors de sa rétractation radiale l'expulsion de l'au moins un tube support et se mettant ainsi automatiquement en place sur l'au moins un câble électrique.

Dans un mode particulier de réalisation, dans lequel l'au moins un tube support comporte deux parties tronconiques séparées, le procédé comporte en outre une étape consistant, après l'étape consistant à disposer la pièce tubulaire expansée autour de l'au moins un tube support, à placer une pièce de verrouillage amovible sur l'au moins un tube support, la pièce de verrouillage amovible maintenant les deux parties tronconiques l'une contre l'autre ; et une étape consistant, après l'étape consistant à disposer l'au moins un tube support et la pièce tubulaire expansée autour de l'au moins un câble électrique, à ôter la pièce de verrouillage amovible.

Cela permet de mieux contrôler l'auto-expulsion de l'au moins un tube support et d'éviter qu'elle ait lieu prématurément.

Les avantages et les caractéristiques particulières du procédé étant similaires à ceux du dispositif, ils ne sont pas répétés ici.

### Brève description des dessins

D'autres aspects et avantages de l'invention apparaîtront à la lecture de la description détaillée ci-après de modes particuliers de réalisation, donnés à titre d'exemples nullement limitatifs, en référence aux dessins annexés, dans lesquels :
[Fig. 1] est une vue schématique en coupe d'un dispositif conforme à la présente invention, dans un mode particulier de réalisation.
[Fig. 2], [Fig. 3], [Fig. 4] et [Fig. 5] sont des vues schématiques en coupe illustrant les principales étapes d'un procédé conforme à la présente invention, dans un mode particulier de réalisation.

### Description de mode(s) de réalisation

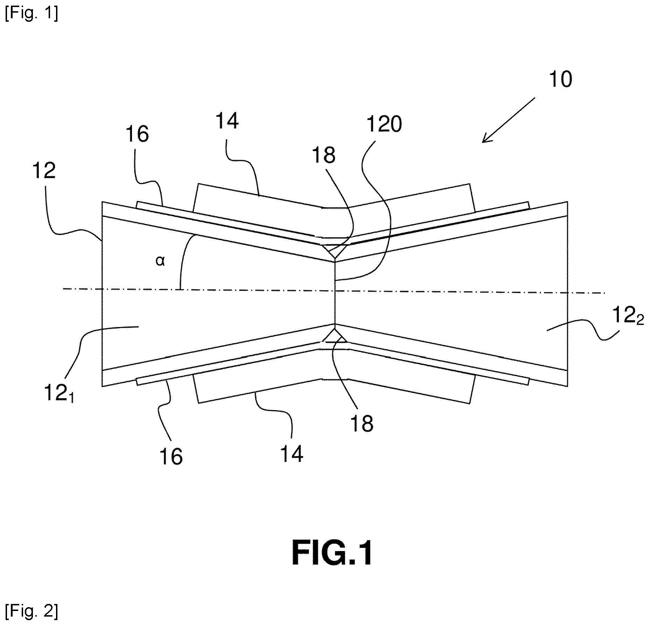

Comme le montre la figure 1, qui est une vue en coupe présentant une symétrie de révolution, un dispositif 10 d'installation d'une pièce tubulaire expansée 14 sur un ou plusieurs câbles électriques conforme à la présente invention comporte un ou plusieurs tubes support 12. Dans le mode particulier de réalisation illustré, le dispositif 10 comporte un tube support 12 en deux parties 12₁ et 12₂.

La pièce tubulaire expansée 14 est disposée sur le tube support 12. C'est une pièce rétractable à froid. A titre d'exemple nullement limitatif, la pièce tubulaire expansée 14 peut être une jonction de câble.

Le dispositif 10 comporte en outre une couche de graisse ou un film plastique 16 ayant des propriétés exceptionnelles de glissement à sec et de résistance à la traction et à la rupture entre le tube support 12 et la pièce tubulaire expansée 14.

Il existe des doseurs de lubrifiants automatiques. La couche de graisse 16 peut ainsi être déposée par pulvérisation automatisée, ou par application automatisée sous forme de cordons. La pression circonférentielle exercée par la pièce tubulaire expansée 14 lors de sa rétractation donne une épaisseur uniforme à la couche de graisse 16.

La surface intérieure de la pièce tubulaire expansée 14 comporte également, de façon connue en soi, des éléments d'étanchéité, par exemple sous forme de mastic (non représenté).

Le tube support 12 comporte au moins une partie tronconique. Dans le mode particulier de réalisation illustré, chaque partie 12₁, 12₂ est tronconique.

Conformément à la présente invention, les parties tronconiques présentent un angle d'ouverture α compris entre 1° et 20°, de préférence compris entre 10° et 20°. Ces valeurs ne sont pas nécessairement respectées sur la figure 1, pour plus de clarté dans la représentation du dispositif 10.

Cet angle est variable et est défini de façon à avoir la force nécessaire et suffisante pour provoquer l'auto-expulsion du tube support 12 mais sans dépasser la limite d'élasticité de la pièce tubulaire expansée 14.

La couche de graisse 16 est avantageusement composée de polytétrafluoroéthylène (PTFE).

Lorsque le tube support 12 comporte deux parties tronconiques 12₁ et 12₂ comme dans le mode particulier de réalisation illustré, ces deux parties peuvent être assemblées par leur extrémité 120 de plus petit diamètre tout en pouvant être séparées l'une de l'autre. Cet assemblage est réalisé par exemple par emboîtement, par clipsage ou par vissage. Les deux parties tronconiques 12₁ et 12₂ peuvent aussi être d'un seul tenant et comporter une zone de rupture au niveau de leur extrémité 120 de plus petit diamètre, de sorte que le tube support 12 est sécable et se rompt en deux parties tronconiques 12₁ et 12₂ lors de la rétractation de la pièce tubulaire expansée 14.

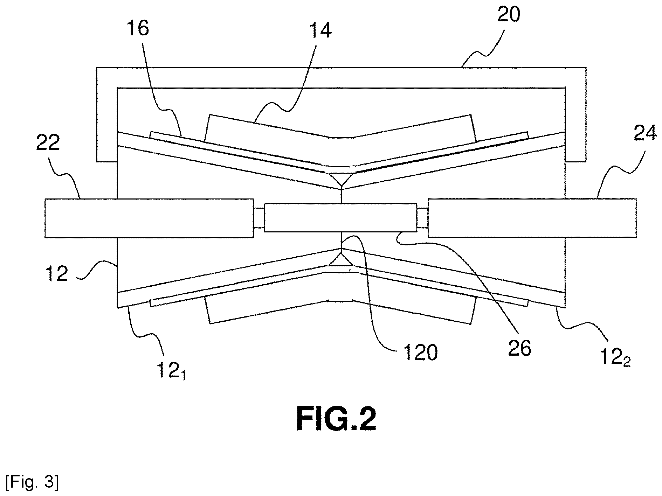

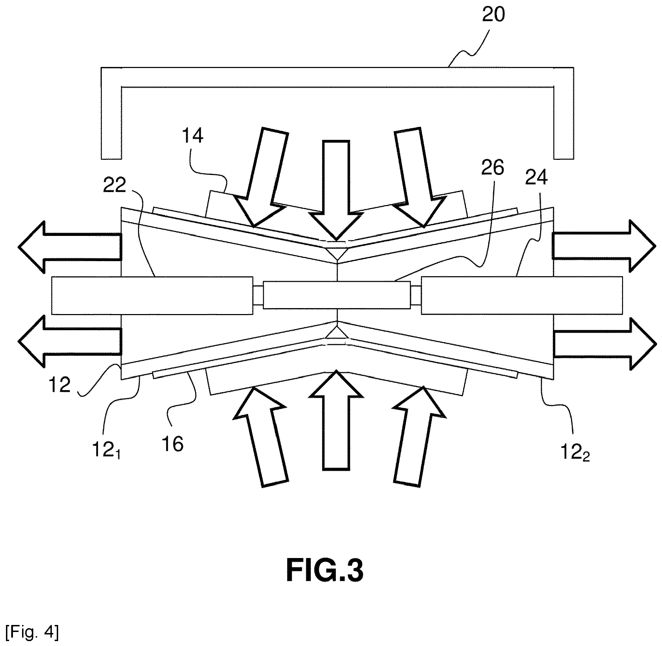

En variante, les deux parties tronconiques 12₁ et 12₂ sont séparées et disposées l'une contre l'autre par leurs extrémités 120 de plus petit diamètre. Dans ce cas, le dispositif 10 peut en outre comporter une pièce 20 de verrouillage amovible telle qu'une tige métallique (comme représenté sur les figures 2 et 3), une corde, un feuillard textile, des vis, des ergots quart-de-tour, etc. qui maintient les extrémités 120 de plus petit diamètre des deux parties tronconiques 12₁ et12₂ l'une contre l'autre. Cette pièce 20 de verrouillage amovible sera retirée par le monteur une fois le dispositif 10 disposé autour des câbles électriques concernés, afin de permettre l'auto-expulsion du tube support 12. La pièce 20 de verrouillage amovible peut aussi consister en au moins une butée amovible ou au moins un clip flexible ou sécable, faisant ou non partie intégrante du tube support 12.

De façon optionnelle, comme dans le mode particulier de réalisation illustré, l'extrémité 120 de plus petit diamètre de chacune des parties tronconiques 12₁ et 12₂ comporte un chanfrein 18.

Le tube support 12 peut être réalisé dans toute matière compatible avec la graisse de la couche de graisse 16.

La surface extérieure du tube support 12 peut être obtenue par moulage par injection et peut comporter une pluralité de rainures longitudinales, ainsi qu'un état de surface réalisé par électroérosion qui réduit encore la surface de contact réelle entre le tube support 12 et la pièce tubulaire expansée 14. La rugosité de surface est idéalement supérieure à 0,1 mm et le défaut de conicité est le plus minime possible.

Pour minimiser l'emploi de lubrifiant et réduire les efforts, la surface de contact entre le tube support 12 et la pièce tubulaire expansée 14 peut en effet être réduite. A titre d'exemple non limitatif, la surface extérieure du tube support 12 peut être pourvue d'une pluralité de skis ou rails, la pièce tubulaire expansée 14 reposant alors sur ces skis. Une rainure peut être créée au milieu de chaque ski pour accueillir un cordon de graisse de la couche de graisse 16, qui peut être déposé de façon automatisée. Cette rainure peut également servir de réserve et permettre ainsi, comme pour un pneu sur chaussée détrempée, d'avoir une pression favorisant l'hydroplanage.

Les vues schématiques en coupe des figures 2 à 5 illustrent les principales étapes successives d'un procédé conforme à la présente invention, d'installation de la pièce tubulaire expansée 14, sur au moins un câble électrique au moyen d'un dispositif 10 tel que décrit ci-dessus. Dans le mode particulier de réalisation illustré, le procédé consiste à installer la pièce tubulaire expansée 14 sur deux câbles électriques 22, 24 assemblés mécaniquement au moyen d'un manchon de connexion 26.

Une première étape du procédé consiste à revêtir le tube support 12 de la couche de graisse ou du film plastique 16.

Puis on dispose la pièce tubulaire expansée 14 autour du tube support 12. Cette opération peut être automatisée.

Dans le mode particulier de réalisation illustré par les figures 2 à 4, le tube support 12 comporte deux parties tronconiques 12₁ et 12₂ séparées. Afin de les maintenir l'une contre l'autre au niveau de leurs extrémités 120 de plus petit diamètre, on place en outre une pièce 20 de verrouillage amovible sur le tube support 12. A titre d'exemple non limitatif, la pièce 20 de verrouillage amovible représentée dans le mode particulier de réalisation des figures 2 et 3 est une tige métallique recourbée à ses deux extrémités, de façon à bloquer les parties tronconiques 12₁ et12₂ par leurs extrémités de plus grand diamètre, comme le montre la figure 2.

Ensuite, on dispose le tube support 12 et la pièce tubulaire expansée 14 autour des câbles électriques 22 et 24. Cette opération peut également être automatisée. On obtient alors la configuration représentée sur la figure 2.

La figure 3 montre plus particulièrement les forces agissant au sein du dispositif 10 lorsqu'on ôte alors la pièce 20 de verrouillage amovible. Le sens de ces forces est matérialisé par des flèches sur les dessins Les mêmes forces sont présentes dans des modes de réalisation où le tube support 20 comporte deux parties tronconiques 12₁ et 12₂ assemblées entre elles.

Ainsi, comme le montre la figure 3, la pièce tubulaire expansée 14 exerce une force de pression circonférentielle sur le tube support 12 lorsqu'elle se rétracte radialement, ce qui crée des forces de poussée en translation longitudinale des parties tronconiques 12₁ et 12₂, de leurs extrémités de plus petit diamètre vers leurs extrémités de plus grand diamètre. Cela déclenche donc l'expulsion du tube support 12.

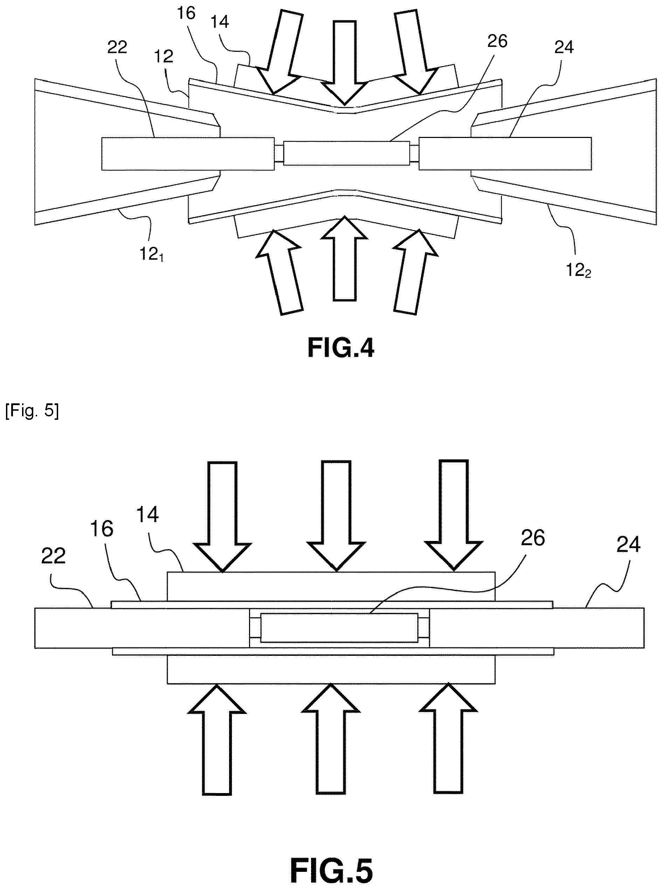

La figure 4 montre le tube support 12 en cours d'expulsion. Les parties tronconiques 12₁ et 12₂ s'éloignent l'une de l'autre jusqu'à sortir entièrement de la région recouverte par la pièce tubulaire expansée 14. La pièce tubulaire 14 se met ainsi automatiquement en place sur les câbles électriques 22 et 24, dans la région comprenant le manchon de connexion 26.

A l'issue de l'expulsion et de la rétractation de la pièce tubulaire expansée 14, la pièce tubulaire expansée 14 est installée sur les câbles électriques 22 et 24, dans la configuration illustrée par la figure 5.

## Revendications

1. Dispositif (10) d'installation d'une pièce tubulaire expansée (14) sur au moins un câble électrique, comportant au moins un tube support (12) sur lequel est disposée ladite pièce tubulaire expansée (14) et une couche de graisse ou un film plastique (16) entre ledit au moins un tube support (12) et ladite pièce tubulaire expansée (14), ledit au moins un tube support (12) comportant au moins une partie tronconique, ledit dispositif (10) étant **caractérisé en ce que** ladite partie tronconique présente un angle d'ouverture (α) compris entre 1° et 20°.

2. Dispositif (10) selon la revendication 1, **caractérisé en ce que** ledit angle d'ouverture (α) est compris entre 10° et 20°.

3. Dispositif (10) selon la revendication 1 ou 2, **caractérisé en ce que** ladite couche de graisse (16) est composée de polytétrafluoroéthylène, PTFE.

4. Dispositif (10) selon la revendication 1, 2 ou 3, **caractérisé en ce que** ledit au moins un tube support (12) comporte deux parties tronconiques (12₁, 12₂) assemblées par leur extrémité (120) de plus petit diamètre et peuvent être séparées l'une de l'autre.

5. Dispositif (10) selon la revendication 1, 2 ou 3, **caractérisé en ce que** ledit au moins un tube support (12) comporte deux parties tronconiques (12₁, 12₂) séparées disposées l'une contre l'autre par leur extrémité (120) de plus petit diamètre et **en ce que** ledit dispositif (10) comporte en outre une pièce (20) de verrouillage amovible maintenant lesdites deux parties tronconiques (12₁, 12₂) l'une contre l'autre.

6. Dispositif (10) selon la revendication 4 ou 5, **caractérisé en ce que** l'extrémité (120) de plus petit diamètre de chacune des deux parties tronconiques (12₁, 12₂) comporte un chanfrein (18).

7. Dispositif (10) selon l'une quelconque des revendications précédentes, **caractérisé en ce que** la surface extérieure dudit au moins un tube support (12) est obtenue par moulage par injection et comporte une pluralité de rainures longitudinales.

8. Procédé d'installation d'une pièce tubulaire expansée (14) sur au moins un câble électrique au moyen d'un dispositif (10) selon l'une quelconque des revendications précédentes, **caractérisé en ce qu'**il comporte des étapes consistant à :
revêtir ledit au moins un tube support (12) de ladite couche de graisse ou dudit film plastique (16) ;
disposer ladite pièce tubulaire expansée (14) autour dudit au moins un tube support (12) ; et
disposer ledit au moins un tube support (12) et ladite pièce tubulaire expansée (14) autour dudit au moins un câble électrique,
ladite pièce tubulaire expansée (14) provoquant lors de sa rétractation radiale l'expulsion dudit au moins un tube support (12) et se mettant ainsi automatiquement en place sur ledit au moins un câble électrique.

9. Procédé selon la revendication 8, dans lequel ledit au moins un tube support (12) comporte deux parties tronconiques (12₁, 12₂) séparées, **caractérisé en ce qu'**il comporte en outre une étape consistant, après l'étape consistant à disposer ladite pièce tubulaire expansée (14) autour dudit au moins un tube support (12), à placer une pièce (20) de verrouillage amovible sur ledit au moins un tube support (12), ladite pièce (20) de verrouillage amovible maintenant lesdites deux parties tronconiques (12₁, 12₂) l'une contre l'autre ; et une étape consistant, après l'étape consistant à disposer ledit au moins un tube support (12) et ladite pièce tubulaire expansée (14) autour dudit au moins un câble électrique, à ôter ladite pièce (20) de verrouillage amovible.
